# EUROPEAN PATENT APPLICATION

(11) **EP 1 372 235 A1**
(43) Date of publication of application: **17.12.2003**
(21) Application number: 02013087.8
(22) Date of filing: 13.06.2002
(51) Int. Cl.: H02H 1/06

(54) **Multifunctional electronic energy saving switch**

(71) Applicant: Comdek Industrial Corp., Hsin Tien, Taipei Hsien (TW)
(72) Inventor: Lin, Ching-Chung, Taipei Hsien (TW)
(74) Representative: Kador & Partner

(57) **Abstract**

A multifunctional electronic energy saving switch that applies multiple numbers of energy charging circuitry to utilize a special switch sequence to replace the known small auxiliary power supply or battery to turn the power supply on after the power supply is shut down, this mechanism can save energy and reduce the equipment cost.

## Description

### BACKGROUND OF THE INVENTION

### I. Field of the Invention

This invention relates generally to a multifunctional electronic energy saving switch and, more specifically, to a multifunctional electronic energy saving switch that can make a power supply without a small auxiliary power supply or a battery to restart the power supply. The power supply is restarted with an internal electrical energy storage that is stored by an internal energy charging circuitry.

### II. Description of the Prior Art

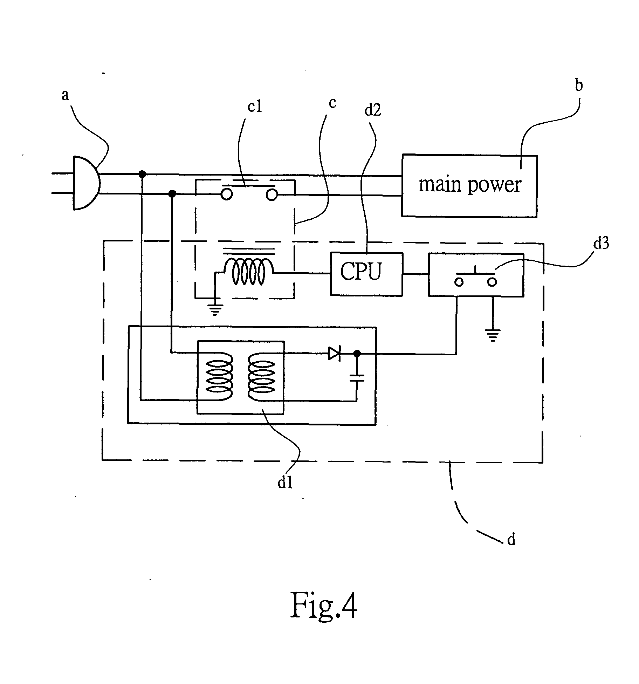

Heretofore, it is known that all the electrical appliances or equipment need a power supply. Most of the power supplies, as shown in FIG 4, are to have a relay control circuitry (c) with a connecting point (c1) between the Ac power outlet (a) and the main power (b). The relay control circuitry (c) utilizes the switch (d) indirectly to control the connecting point (c1) on or off to make main power (b) turn on or off. However, the structure has to have another small auxiliary power (d1) of the switch power control circuitry (d), for example a small current transformer regulator, to offer a small power of the microprocessor (d2) of the switch power control circuitry (d) to process the signals sent by switch (d3) to activate relay control circuitry (c) to turn on or off the main power (b). Therefore the power supply needs extra cost of the small auxiliary power (d1), the microprocessor (d2) and the switch (d3). The standby power is also needed for the small auxiliary power (d1).

### SUMMARY OF THE INVENTION

It is therefore a primary object of the invention to provide a multifunctional electronic energy saving switch that applies multiple numbers of energy charging circuitry to utilize a special switch sequence, and an Ac or Dc high impedance charging circuitry that is installed between the primary control circuitry and the secondary control circuitry and also connects to the electrical storage capacitor to replace the known small auxiliary power supply or battery to turn the power supply on after the power supply is shut down, this mechanism can save energy and reduce the equipment cost.

### BRIEF DESCRIPTION OF THE DRAWINGS

The accomplishment of the above-mentioned object of the present invention will become apparent from the following description and its accompanying drawings which disclose illustrative an embodiment of the present invention, and are as follows:
FIG 1 is a block diagram of the present invention;
FIG 2 is a block diagram of a further embodiment of the present invention;
FIG 3 is another block diagram of a further embodiment of the present invention;
FIG 4 is a circuit diagram of an embodiment of the prior art.

### DESCRIPTION OF THE PREFERRED EMBODIMENT

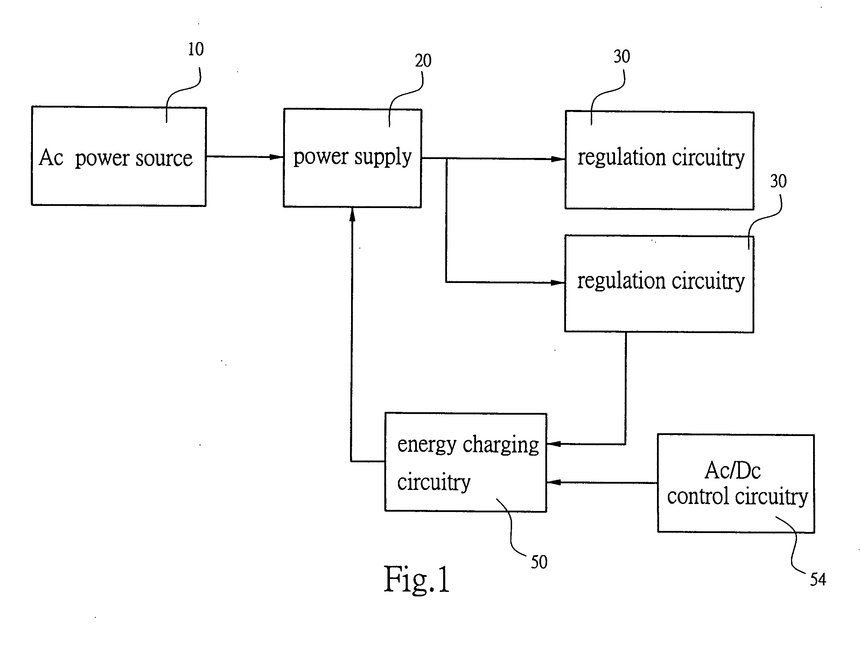

Referring to FIG 1, the present invention is composed of an Ac power source 10, a power supply 20 and a regulation circuitry 30. The power supply 20 has voltage transform, current regulation and voltage stable functions. Between the main power circuit and the secondary power circuit of the power supply 20 is an energy charging circuitry 50 that can store electrical power. The energy charging circuitry 50 applies a special switch sequence to replace the known small auxiliary power supply to turn power supply 20 on after the power supply 20 is shut down with the charged and saved electrical energy, this mechanism can save energy and reduce the equipment cost.

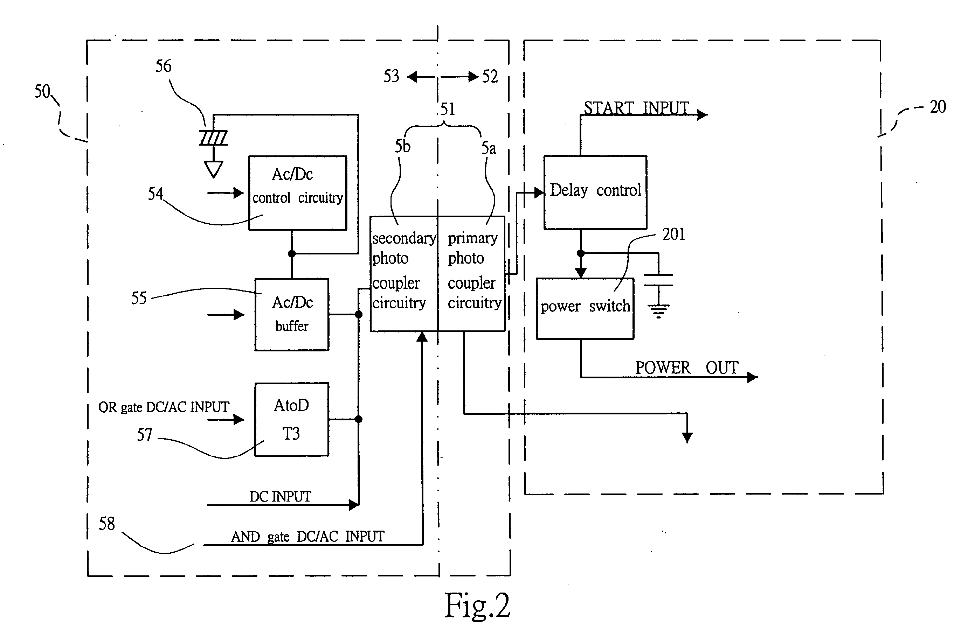

Referring to FIG 2, the energy charging circuitry 50 consists of a photo coupler 51, a primary control circuitry 52 and a secondary control circuitry 53. The primary control circuitry 52 and the secondary control circuitry 53 are connected and controlled by the photo coupler 51. The secondary control circuitry 53 receives the signals from the Ac/Dc control circuitry 54 to turn on or shut off the power switch 201 of the power supply 20. The secondary control circuitry 53 also connects to an Ac/Dc buffer 55 and an electrical storage capacitor 56.

Based on above description, the Ac/Dc control circuitry 54 of the secondary control circuitry 53 outputs signals to the Ac/Dc buffer 55 and makes the electrical storage capacitor 56 discharges current; the current passes the secondary photo coupler circuitry 5b and triggers the primary photo coupler 5a to conduct, and turns the power supply 20 on. Otherwise the power supply 20 and the energy charging circuitry 50 are off and in power saving state. While at power on state the electrical storage capacitor 56 of the power supply is being charged to supply power at power off state to activate power supply 20.

The power supply 20 on the other side of the primary control circuitry 52 can utilize LCU3842, TDA4601... as components to form a main power with internal power switch 201. The secondary control circuitry 53 can receive inputs from the logic circuitry 57 with numbers of OR gates or the logic circuitry 58 with numbers of AND gates, those input signals can be PC's, PC monitors or DDC systems (not shown on FIG). The present invention can make other independent Ac or Dc control signals' energy convert to Dc current and store inside the circuitry to achieve the function of energy storage.

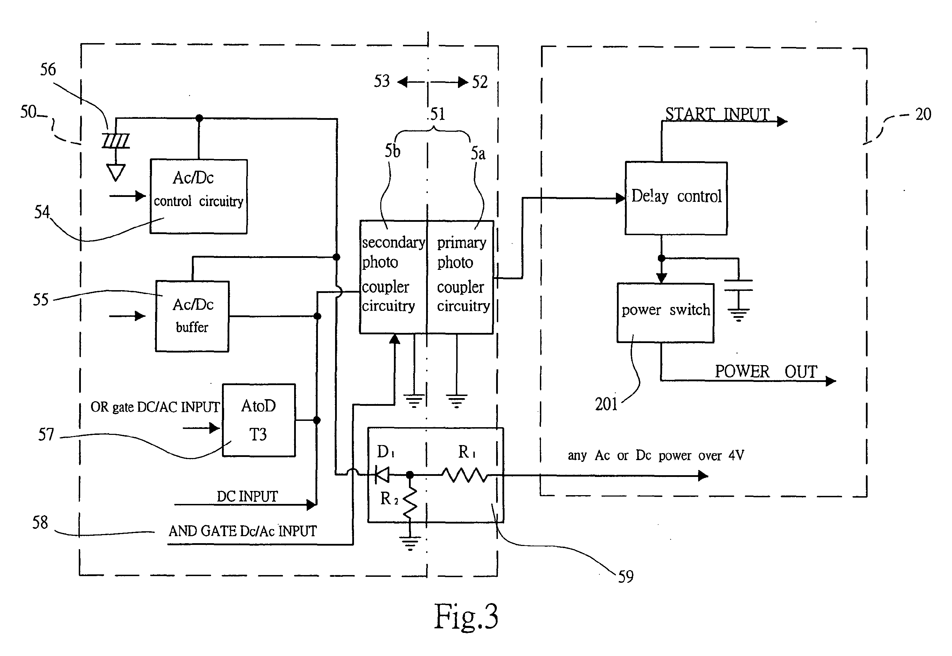

Based on above structure and refer to FIG 3, an Ac or Dc high impedance charging circuitry 59 can be installed between the primary control circuitry 52 and the secondary control circuitry 53, and also connects to the electrical storage capacitor 56, a very small current (about 1 uA) can compensate the leakage of the electrical storage capacitor 56 to make the electrical storage capacitor 56 store electrical power and accumulate electrical power. When the power is off, the Ac/Dc control circuitry 54 forms an impedance more than 10MΩ, almost becomes an insulator, therefore forces the loading of the electrical storage capacitor 56 approaches insulation; the only way to discharge or leakage is the internal impedance of the electrical storage capacitor 56 and the A to D impedance that is almost insulation, therefore only 1 uA of current or any Ac or Dc power over 4V can charge the electrical storage capacitor 56. The major feature is to accumulate very small current to a larger electrical power and used by the circuitries; if the electrical storage capacitor 56 already has electrical power, the small current can compensate the discharge or leakage current to achieve enough energy on the electrical storage capacitor 56.

While a preferred embodiment of the invention has been shown and described in detail, it will be readily understood and appreciated that numerous omissions, changes and additions may be made without departing from the spirit and scope of the invention.

## Claims

1. A multifunctional electronic energy saving switch comprising:
an Ac power source;
a power supply functioning voltage transform, current regulation and voltage stable;
a regulation circuitry;
a multiple numbers of energy charging circuitry connected in parallel with said power supply, said energy charging circuitry applies a special switch sequence to replace the known small auxiliary power supply to turn said power supply on after said power supply is shut down with the charged and saved electrical energy.

2. The multifunctional electronic energy saving switch recited in claim 1, wherein said energy charging circuitry connected between the primary control circuitry and the secondary control circuitry of said power supply, or only in the primary control circuitry or the secondary control circuitry of said power supply.

3. The multifunctional electronic energy saving switch recited in claim 2, wherein said energy charging circuitry compromising a photo coupler, on one side of said photo coupler is said primary control circuitry, on the other side of said photo coupler is said secondary control circuitry, said primary control circuitry and said secondary control circuitry are connected and controlled by said photo coupler, said secondary control circuitry receives the signals from an Ac/Dc control circuitry to turn on or shut off the power switch of said power supply, said secondary control circuitry also connects to an Ac/Dc buffer and an electrical storage capacitor.

4. The multifunctional electronic energy saving switch recited in claim 3, wherein said power supply utilizing LCU3842, TDA460 as components to form a main power with internal switch.

5. The multifunctional electronic energy saving switch recited in claim 3, wherein said secondary control circuitry also receives inputs from the logic circuitry with numbers of OR gates or the logic circuitry with numbers of AND gates, those input signals can be PC's, PC monitors, DDc systems or other independent Ac or Dc control signals.

6. The multifunctional electronic energy saving switch recited in claim 4 or 5, wherein said multifunctional electronic energy saving switch converting other independent Ac or Dc control signals' energy into Dc current and storing the electrical energy inside the circuitry.

7. The multifunctional electronic energy saving switch recited in claim 1 to 6, wherein an Ac or Dc high impedance charging circuitry installed between said primary control circuitry and said secondary control circuitry, and also connects to said electrical storage capacitor, a very small current can compensate the leakage of said electrical storage capacitor to make said electrical storage capacitor store electrical power and accumulate electrical power.
